# EUROPÄISCHE PATENTSCHRIFT

(11) **EP 2 240 339 B1**
(45) Veröffentlichungstag und Bekanntmachung des Hinweises auf die Patenterteilung: **05.12.2012**
(21) Anmeldenummer: 09744059.8
(22) Anmeldetag: 12.10.2009
(51) Int. Cl.: B60K 6/40, B60K 6/48, B60K 6/54

(54) **KRAFTFAHRZEUGANTRIEBSSTRANG**
MOTOR VEHICLE POWER TRAIN
CHAÎNE CINÉMATIQUE POUR VÉHICULE AUTOMOBILE

(30) Priorität: 18.10.2008 DE 102008052288
(43) Veröffentlichungstag der Anmeldung: 20.10.2010
(73) Patentinhaber: Voith Patent GmbH, 89522 Heidenheim (DE)
(72) Erfinder: WÜST, Bernhard, 89518 Heidenheim (DE)
(74) Vertreter: Dr. Weitzel & Partner
(86) Internationale Anmeldenummer: PCT/EP2009/007323
(87) Internationale Veröffentlichungsnummer: WO 2010/043361

(56) Entgegenhaltungen:
- EP-A- 1 069 310
- EP-A- 1 209 016
- DE-A1- 10 203 259

## Beschreibung

Die vorliegende Erfindung betrifft einen Kraftfahrzeugantriebsstrang, insbesondere für schwere Nutzfahrzeuge zum Personen- und Gütertransport, wie beispielsweise Stadtbusse.

In jüngster Zeit wurden hybridgetriebene Nutzfahrzeuge bekannt, deren Antriebsstrang im Wesentlichen einen als Verbrennungsmotor ausgeführten Hauptantriebsmotor, einen Elektromotor sowie ein Getriebe umfasst. Dabei sind herkömmlich der Verbrennungsmotor, der Elektromotor und das Getriebe in Leistungsübertragungsrichtung von einer Abtriebswelle des Verbrennungsmotors zu einer Getriebeausgangswelle gesehen hintereinander angeordnet. Herkömmlich sind der Verbrennungsmotor und der Elektromotor in eine Triebverbindung mit der Getriebeeingangswelle zum Antreiben von Fahrzugrädem bringbar, so dass diese entweder vom Verbrennungsmotor, vom Elektromotor allein oder von beiden gemeinsam antreibbar sind. Etwaige im Antriebsstrang angeordnete Nebenaggregate werden dabei insbesondere ausschließlich vom Verbrennungsmotor angetrieben. Eine solche Anordnung ist als Parallelhybrid bekannt geworden.

Das dokument DE10203259 offenbart einen Kraftfahrzeugantriebsstrang nach dem Oberbegriff des Anspruchs 1.

Moderne Parallelhybridantriebe umfassen dabei eine sogenannte Start-Stopp-Automatik, welche die Verbrennungskraftmaschine für die Dauer eines Betriebszustands des Fahrzeugs, der herkömmlich durch geringe Leistungsabgabe der Verbrennungskraftmaschine charakterisiert war, außer Betrieb setzt. Ein derartiges System wird beispielsweise bei Personenkraftwagen eingesetzt, wobei der Motor zum Beispiel beim Warten an Ampeln automatisch stillgesetzt und durch Betätigung eines Kupplungs- oder Fahrpedals durch den Fahrer wieder automatisch in Betrieb genommen wird.

Die Kraftstoffeinsparung mittels der Start-Stopp-Automatik stößt jedoch besonders im Nutzfahrzeugbereich schnell an ihre Grenzen, insbesondere dann, wenn während des Stillstands des Fahrzeugs Nebenaggregate weiter betrieben werden müssen, die wichtige Funktionen des Nutzfahrzeugs aufrechterhalten, wie beispielsweise der Antrieb von Kompressoren für die Druckluft- oder Klimaanlage oder von Generatoren zur Stromerzeugung. Zum anderen ist eine Fülle von Sonderfahrzeugen (zum Beispiel Müllfahrzeuge) bekannt, welche Nebenaggregate umfassen, die besonders im Stand eine hohe Leistungsaufnahme besitzen (zum Beispiel Einrichtungen zum Ausleeren von Mülltonnen oder Pressen). In einem solchen Fall werden die Nebenaggregate solcher Fahrzeuge, auch wenn diese einen Parallelhybridantrieb aufweisen, im Stillstand des Fahrzeugs ausschließlich über die Verbrennungskraftmaschine betrieben. Zwar wurden in jüngster Zeit Versuche unternommen, Nebenaggregate, wie zum Beispiel Klimakompressoren für Personenkraftwagen, bei Außerbetriebnahme der Verbrennungskraftmaschine mittels separaten Elektromotoren anzutreiben, jedoch sind diese Antriebe einerseits komplex im Aufbau, relativ groß bauend sowie schwer und teuer in der Herstellung.

Der vorliegenden Erfindung liegt die Aufgabe zugrunde, einen Kraftfahrzeugantriebsstrang anzugeben, der die Nachteile des Standes der Technik vermeidet. Zugleich soll die Kraftstoffersparnis möglichst groß, die Herstellung möglichst kostengünstig sein und komplexe Konstruktionen sollen weitgehend vermieden werden. Insbesondere soll die volle Funktionsfähigkeit des Fahrzeugs mit dessen Nebenaggregaten in jedem Betriebszustand des Fahrzeugs (Traktion, Stillstand) unabhängig davon, ob die Verbrennungskraftmaschine in Betrieb ist oder nicht, gewährleistet sein.

Diese Aufgabe wird durch einen Kraftfahrzeugantriebsstrang nach dem unabhängigen Anspruch gelöst. Die abhängigen Ansprüche stellen dabei bevorzugte Ausführungsformen der Erfindung dar.

Ein erfindungsgemäßer Kraftfahrzeugantriebsstrang, insbesondere für schwere Nutzfahrzeuge, weist einen Hauptantriebsmotor, insbesondere Verbrennungsmotor, wie Diesel- oder Benzinmotor, umfassend eine Abtriebswelle zum Antrieb von Antriebsrädern des Kraftfahrzeugs sowie einen Elektromotor, umfassend einen Läufer und eine Stator, ebenfalls zum Antrieb der Antriebsräder des Kraftfahrzeugs, auf. Ferner ist ein automatisches Getriebe, umfassend eine Vielzahl von wahlweise einstellbaren Triebverbindungen zur Darstellung von Gängen und eine Getriebeeingangswelle sowie eine Getriebeausgangswelle, um eine Vielzahl von Übersetzungen zwischen der Getriebeeingangswelle und der Getriebeausgangswelle wahlweise einzustellen, vorgesehen. Dabei ist der Läufer des Elektromotors in einer Triebverbindung zwischen der Abtriebswelle des Hauptantriebsmotors und der Getriebeeingangswelle angeordnet und mittels einer Trennkupplung von der Abtriebswelle abkuppelbar. Weiterhin ist wenigstens ein Nebenaggregat, das mittels des Hauptantriebsmotors antreibbar ist, vorgesehen. Erfingdungsgemäß umfasst der Läufer des Elektromotors einen Außenantrieb mit einer Verzahnung oder Reibfläche, welche in einer treibenden Verbindung mit dem wenigstens einen Nebenaggregat steht, um dieses mittels des Läufers anzutreiben.

Somit kann der Elektromotor zusätzlich oder alternativ zum Hauptantriebsmotor zum Antreiben eines oder einer Vielzahl von Nebenaggregaten insbesondere unabhängig davon, ob das Fahrzeug fährt oder stillsteht, eingesetzt werden. Mit anderen Worten steht das wenigstens eine Nebenaggregat in einer Triebverbindung mit dem Hauptantriebsmotor und/oder dem Elektromotor oder ist in eine solche schaltbar, um wahlweise oder gleichzeitig Antriebsleistung vom Hauptantriebsmotor und Elektromotor auf das Nebenaggregate zu übertragen. Die beim Elektroantrieb nötige Antriebsenergie wird beispielsweise durch entsprechende im Fahrzeug angeordnete Speicher für elektrische Energie bereitgestellt. Diese können zum Beispiel Akkumulatoren wie Nickel- oder Lithium-Akkus, Hochleistungs- oder Doppelschichtkondensatoren (SuperCaps) sein. Auch können die elektrischen Speicher mittels externen Spannungsquellen, wie Oberleitungen oder dem gewöhnlichen Stromnetz, aufgeladen werden. Im Falle der Aufladung über das Stromnetz ist der elektrische Speicher frei von einer permanenten Verbindung mit der Stromquelle, so dass diese lediglich für die Dauer der Aufladung, wobei das Fahrzeug stillgesetzt ist, mit dem elektrischen Speicher verbunden ist (Plug-In-Hybrid). Anstelle des elektrischen Speichers kann die elektrische Energie zum Antreiben des oder der Vielzahl von Elektromotoren des Kraftfahrzeugantriebsstrangs ausschließlich über die Oberleitung zur Verfügung gestellt werden (z.B. Oberleitungsbus). Auch ist eine Rekuperation von Bremsenergie durch den Elektromotor des Kraftfahrzeugantriebsstrangs möglich, wobei dieser derart ausgeführt ist, dass er auch generatorisch betrieben werden kann, um die Antriebsräder des Kraftfahrzeugs zu verzögern und gleichzeitig die elektrischen Speicher zu laden (elektrische Dauerbremse).

Als Hauptantriebsmotor des erfindungsgemäßen Kraftfahrzeugantriebsstrangs kann anstelle des Verbrennungsmotors ein alternativer Antrieb, beispielsweise ein Elektromotor, insbesondere als Teil eines Brennstoffzellenantriebs vorgesehen sein. Auch kann der Elektromotor in einem solchen Fall oder bei Vorsehen eines Verbrennungsmotors als Hauptantriebsmotor, als Transversalflussmaschine ausgebildet sein, wie sie zum Beispiel in DE 198 58 304 beschrieben ist.

Bei Vorsehen eines Verbrennungsmotors als Hauptantriebsmotor kann letzterer kleiner ausgeführt werden, wobei trotz Abgabe eines kleineren Drehmoments und Verringerung des Gewichts sowie Platzbedarfs oder des Hubraums ein höherer Wirkungsgrad und somit eine Kraftstoffersparnis erreicht werden kann, da der Verbrennungsmotor in ungünstigen Arbeitspunkten durch Zuschalten des Elektromotors zum Antriebsstrang unterstützt wird (Downsizing).

Besonders bevorzugt weist das Getriebe ein Getriebegehäuse auf, auf dessen erster Stirnseite die Getriebeeingangswelle angeordnet ist, und auf dessen zweiter, der ersten Stirnseite entgegengesetzt angeordneten Stirnseite insbesondere die Getriebeausgangswelle angeordnet ist, und auf der ersten Stirnseite am Getriebegehäuse ein Nebenabtriebsmodul angeschlossen ist, umfassend ein Gehäuse, welches den Elektromotor, die Trennkupplung sowie eine beispielsweise aus dem Gehäuse herausragende Nebenabtriebswelle umschließt, wobei die Nebenabtriebswelle in einer Triebverbindung mit dem Läufer steht und insbesondere ein Ritzel trägt, das mit der Außenverzahnung des Läufers unmittelbar oder über ein zwischengeschaltetes Zahnrad kämmt und das Nebenaggregat oder einen Rotor desselben antreibt und insbesondere trägt.

Das Nebenabtriebsmodul ist somit in Leistungsübertragungsrichtung gesehen vom Hauptantriebsmotor zum Getriebe hinter dem Hauptantriebsmotor und vor dem Getriebe, insbesondere dem Traktionsgetriebe, im Kraftfahrzeugantriebsstrang angeordnet. Dabei kann eine Vielzahl von Nebenaggregaten im Nebenabtriebsmodul vorgesehen sein, welche mittelbar oder unmittelbar in Triebverbindung mit dem Läufer zur Leistungsverzweigung stehen oder in eine solche bringbar sind. Dabei bedeutet mittelbar, dass die Nebenaggregate über eine Vielzahl von Ritzeln, die direkt oder indirekt mit dem Läufer des Elektromotors kämmen, angetrieben werden, wobei die Nebenaggregate dann in Leistungsflussrichtung gesehen insbesondere hintereinander angeordnet sind.

Die zusammenfassende Anordnung von Elektromotor, Trennkupplung und Nebenabtrieb mit den dazugehörigen Nebenaggregaten in einem gemeinsamen Gehäuse ermöglicht eine kompakte, platzsparende und modulare Bauweise des Nebenabtriebsmoduls. Durch diese Bauweise werden zusätzlich Gewicht und Kosten gespart. Hierdurch wird es auch möglich, das Nebenabtriebsmodul nachträglich in einen Kraftfahrzeugantriebsstrang eines bestehenden Fahrzeugs einzubauen. Anstelle des automatischen Getriebes kann dieses auch als manuelles oder automatisiertes Schaltgetriebe ausgeführt sein.

Wird der erfindungsgemäße Kraftfahrzeugantriebsstrang beispielsweise derart ausgestaltet, dass der Elektromotor wenigstens zeitweise über eine Oberleitung mit Strom versorgt wird, so kann zusätzlich eine Isolierung des elektrischen Motors vom restlichen Fahrzeugantriebsstrang vorgesehen sein. Beispielsweise können die Gehäuse des Getriebes und des Nebenabtriebsmoduls über geeignete Isolatoren voneinander elektrisch getrennt werden. Auch können die einzelnen Nebenaggregate untereinander oder gegenüber dem Läufer elektrisch isoliert werden, wobei hierzu beispielsweise Ritzel und Zahnräder aus nicht leitenden Werkstoffen (zum Beispiel Kunststoff) eingesetzt werden. Auch kann es vorgesehen sein, das Nebenabtriebsmodul gegenüber dem Verbrennungsmotor und einem dem Verbrennungsmotor nachgeschalteten Schwungrad oder Drehschwingungsdämpfer zu isolieren. Bezüglich der Isolation besteht eine Vielzahl von Möglichkeiten, die im Tätigkeitsbereich des zuständigen Fachmanns liegen, weshalb hier im Einzelnen nicht auf den genauen Aufbau eingegangen wird.

Vorteilhaft kann das automatische Getriebe ein Differenzialwandlergetriebe sein oder zusätzlich einen Trilok-Wandler umfassen.

Bevorzugt steht der Läufer des Elektromotors in einer Triebverbindung, insbesondere in einer ständigen Triebverbindung mit wenigstens einer Pumpe, insbesondere Ölpumpe und/oder Wasserpumpe. Eine solche Pumpe kann als Nebenaggregat ebenso im Nebenabtriebsmodul untergebracht sein und sorgt zum Beispiel für eine Umwälzung eines Kühlmediums in einem Kühlkreislauf zum Kühlen der Nebenaggregate und/oder des Elektromotors und/oder des Hauptantriebsmotors sowie anderer insbesondere elektronischer Komponenten und/oder Abgassysteme. Im letzteren Fall kann zum Beispiel ein in einem Abgasrückführungssystem vorgesehener Kühler oder ein Ladeluftzwischenkühler bei Vorsehen wenigstens eines Turboladers mit zugehörigem Verdichter zur Wärmeabfuhr durchströmt werden.

Bevorzugt wird die wenigstens eine Pumpe über die Getriebeeingangswelle angetrieben, wobei zwischen der Getriebeeingangswelle und der Vielzahl von wahlweise einstellbaren Triebverbindungen zur Darstellung von Gängen eine zweite Trennkupplung vorgesehen ist. Dabei werden die einstellbaren Triebverbindungen im Wesentlichen durch Vorgelegesätze und Kupplungen dargestellt (Zwischengetriebe). Beispielsweise kann die Pumpe im Bedarfsfall mittels einer schaltbaren Kupplung, die zum Beispiel zwischen Pumpe und Getriebewelle angeordnet sein kann, zugeschaltet werden, wobei das Zwischengetriebe derart ausgeführt sein kann, dass es eine Übersetzung ins Schnelle liefert, so dass die Pumpe stets mit einer höheren Drehzahl als die Getriebeeingangswelle angetrieben wird (Übersetzungsverhältnis größer 2,5).

Die Erfindung soll nachfolgend anhand von Ausführungsbeispielen und den beigefügten Figuren exemplarisch erläutert werden. Es zeigen:
- Figur 1: eine schematische Darstellung einer ersten Ausführungsform eines erfindungsgemäßen Kraftfahrzeugantriebsstranges;
- Figuren 2 bis 4: eine Ausführungsform eines automatisierten Getriebes (Direktwandler- oder Trilokgetriebe) eines erfindungsgemäßen Kraftfahrzeugantriebsstrang;
- Figur 5: eine Tabelle, in der die Funktionen der erfindungsgemäßen Komponenten abhängig vom Betriebszustand des erfindungsgemäßen Kraftfahrzeugantriebsstranges dargestellt sind;
- Figur 6: eine Darstellung gemäß Figur 5, jedoch ist die erste Trennkupplung als Klauenkupplung ausgeführt.

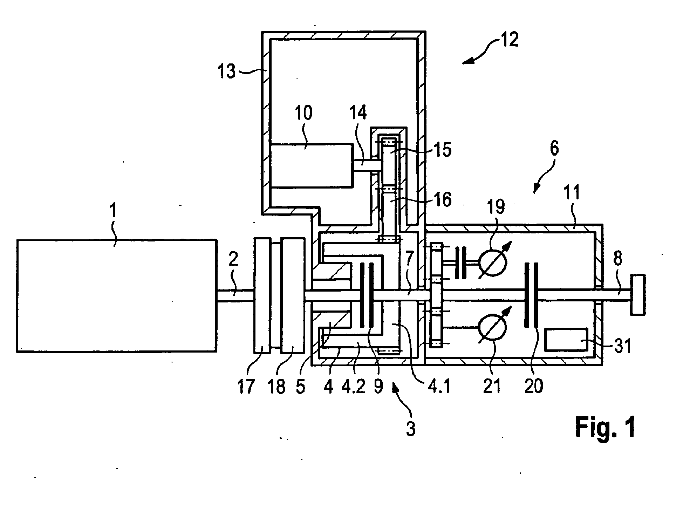

Figur 1 zeigt eine schematische Darstellung einer ersten Ausführungsform eines erfindungsgemäßen Kraftfahrzeugantriebsstranges. Dabei sind in Leistungsübertragungsrichtung gesehen die folgenden Komponenten hintereinander geschaltet: ein Hauptantriebsmotor 1, eine Abtriebswelle 2, ein Schwungrad 17, ein Drehschwingungsdämpfer 18, eine erste Trennkupplung 9, ein Elektromotor 3 und ein Getriebe 6, umfassend eine erste und zweite Pumpe 19, 21, eine zweite Trennkupplung 20 sowie eine Getriebeabtriebswelle 8. Vorliegend ist der Hauptantriebsmotor 1 als Verbrennungsmotor ausgeführt und treibt in einem ersten Betriebszustand bei eingerückter erster Trennkupplung 9 die Getriebeeingangswelle 7, die Getriebeausgangswelle 8 des Getriebes 6 und über eine mit der Getriebeausgangswelle 8 in Triebverbindung stehende nicht gezeigte Gelenkwelle ebenfalls nicht gezeigte Antriebsräder des Fahrzeugs an (erster Leistungszweig). Gleichzeitig wird Antriebsleistung über den Läufer 4 des Elektromotors 3, welcher drehfest mit der Antriebswelle 2 umläuft, auf ein Nebenaggregat 10 zu dessen Antrieb übertragen (zweiter Leistungszwelg). Dazu umfasst der Läufer 4 insbesondere auf dessen Außenumfang einen Außenantrieb, der in Form eines Zahnrad-, Riemen- oder Kettentriebes ausgebildet sein kann. Hier ist der Außenantrieb als Verzahnung ausgeführt, wobei der Läufer 4 eine Außenverzahnung umfasst, welche mit einem zwischengeschalteten Zahnrad 16 und einem Ritzel 15 kämmt und somit das Nebenaggregat 10 über das Ritzel 15 und eine damit drehfest verbundene Nebenabtriebswelle 14 antreibt. Mit dem Ritzel 15 kann ebenso eine Vielzahl von zwischengeschalteten Zahnrädern 16 unter Bildung einer Getriebestufe mit der Außenverzahnung des Läufers 4 kämmen, um insbesondere über eine Vielzahl von Nebenabtriebswellen eine Vielzahl von Nebenaggregaten 10 anzutreiben. Somit wird eine Vielzahl von Nebenaggregaten 10, welche mittelbar und insbesondere ständig über die Insbesondere einzige Außenverzahnung mit dem Läufer 4 in Triebverbindung stehen, angetrieben. Ferner wäre es denkbar, einzelne oder alle Nebenaggregate 10 durch Vorsehen wenigstens einer Kupplung gleichzeitig oder wahlweise von dieser Triebverbindung zu trennen.

Alternativ wäre es möglich, die Außenverzahnung auf der Getriebeeingangswelle 7 In Leistungsflussrichtung gesehen hinter dem Läufer 4 anzuordnen.

In einem zweiten Betriebszustand ist die erste Trennkupplung 9 ausgerückt, so dass die Triebverbindung zwischen der Abtriebswelle 2 und der Getriebeeingangswelle 7 unterbrochen ist, wobei insbesondere der Hauptantriebsmotor 1 stillsteht. Dieser Betriebszustand stellt sich beispielsweise bei Aktivierung einer Start-Stopp-Automatik im Stillstand des Kraftfahrzeugs ein. Dabei wird der Elektromotor über eine nicht gezeigte Verbindungsleitung mit einem ebenfalls nicht gezeigten Speicher für elektrische Energie oder einer externen Stromquelle mit Energie versorgt. In diesem Betriebszustand sorgt ausschließlich der Elektromotor 3 für den Antrieb der Getriebeeingangswelle 7 und bei geschlossener zweiter Trennkupplung 20 auch dafür, dass Antriebsieistung über die Getriebeausgangswelle 8 an die nicht dargestellten Antriebsräder übertragen wird. Gleichzeitig wird in einem zweiten Leistungszweig, wie oben beschrieben, das wenigstens eine Nebenaggregat 10 über den Läufer 4 wenigstens mittelbar angetrieben.

Die erste Trennkupplung 9, der Elektromotor 3, umfassend Läufer 4 und Stator 5, das zwischengeschaltete Zahnrad 16 sowie das Ritzel 15 und die Nebenabtriebswelle 14 und das wenigstens eine Nebenaggregat 10 sind vorliegend in einem gemeinsamen Gehäuse 13 angeordnet. Im vorliegenden Fall ist der den Elektromotor 3 umgebende Teil des Gehäuses 13 zwischen dem Getriebe 6 und dem Drehschwingungsdämpfer 18 angeordnet, wobei dieser Teil des Gehäuses 13 mit dessen Stirnseite der Stirnseite mit der Getriebeeingangswelle 7 des Getriebes 6 zugewandt ist. Der ein oder eine Vielzahl von Nebenaggregaten 10 umfassende Teil des Gehäuses 13 ist in Axialrichtung gesehen neben dem Getriebe 6 angeordnet, das heißt, dass sich das Gehäuse 13 axial in Richtung auf den Hauptantriebsmotor 1 hin erstreckt. Auch könnte sich das Gehäuse 13 axial in Richtung des Gehäuses 6 auf die Getriebeabtriebswelle 8 hin erstrecken. Ebenso sind auch andere Anordnungen denkbar, insbesondere solche, in denen die Nebenabtriebswelle 14 winklig zur Getriebeeingangswelle 7 verläuft.

Wie aus Figur 1 ersichtlich ist, ist die erste Trennkupplung 9 zwischen einem axialen Ende des Stators 5 und einem radialen Abschnitt 4.1 des Läufers 4 angeordnet. Dabei umschließt ein axialer Abschnitt 4.2 des Läufers 4 wenigstens einen Teil des Stators 5 und die erste Trennkupplung 9. Der Stator 5 kann drehfest und insbesondere einteilig mit dem Gehäuse 13 ausgeführt sein. Dieser ist vorliegend kreisringförmig und bildet eine Durchführung für die Abtriebswelle 2, wobei er letztere radial umschließt. Die erste Trennkupplung 9 kann zu deren Betätigung an einen Ölkreislauf des Getriebes 6 angeschlossen sein oder aber anderweitig, zum Beispiel pneumatisch, elektrisch, elektromagnetisch oder mechanisch betätigbar sein. Im Falle der hydraulischen Betätigung der ersten Trennkupplung 9 durch den Ölkreislauf des Getriebes 6 kann die Trennkupplung 9 derart ausgeführt sein, dass sie frei von einer Beaufschlagung mit Getriebeöl eingerückt, also geschlossen ist und bei Beaufschlagung öffnet.

Zusätzlich zur ersten Trennkupplung 9 kann insbesondere im Bereich des Getriebes 6 eine weitere zweite Trennkupplung 20 vorgesehen sein. Diese ist in Leistungsflussrichtung dem Elektromotor 3 nachgeschaltet, wobei ein erstes Kupplungsteil drehfest mit der Getriebeeingangswelle 7 und ein zweites Kupplungsteil drehfest mit der Getriebeausgangswelle 8 verbunden ist.

Weiterhin ist hier die erste Pumpe 19 dem Getriebe 6 zugeordnet und im Getriebegehäuse 11 untergebracht. Diese ist insbesondere stets drehfest oder drehfest ankuppelbar mit der Getriebeeingangswelle 7 verbunden. Auch wäre es denkbar, diese im Nebenabtriebsmodul 12 und insbesondere innerhalb des Gehäuses 13 unterzubringen und über den Läufer 4 anzutreiben. Die Pumpe 19 kann aber auch von einem separaten Elektromotor angetrieben werden. Sie dient im Wesentlichen dazu, die Druckölversorgung für das Getriebe 6 und/oder die Nebenaggregate 10 bereits bei niedrigen Drehzahlen der Getriebeeingangswelle 7 zu gewährleisten. Ist das Getriebe 6 beispielsweise als Drehmomentwandlergetriebe ausgeführt, so dient die Pumpe 19 zum Erzeugen eines Ölvolumenstromes, mit dem die hydrodynamische Komponente des Drehmomentwandlers betrieben werden kann, um beispielsweise den Gang des Getriebes zu wechseln, den Drehmomentwandler zu überbrücken oder das Getriebe ohne Schlupf zum Antriebsstrang anzukoppeln. Die Pumpe 19 kann über eine Kupplung wahlweise in die Triebverbindung mit der Getriebeeingangswelle 7, wie hier gezeigt, schaltbar sein. Auch kann ein Zwischengetriebe vorgesehen sein, mittels welchem die Drehzahl des Pumpenlaufrads der Pumpe 19 in Abhängigkeit der Drehzahl der Getriebeeingangswelle 7 übersetzt werden kann. Zusätzlich zur Pumpe 19 kann eine insbesondere ständig in Triebverbindung mit der Getriebewelle 7 stehende weitere Ölpumpe 21 vorgesehen sein, welche für einen kontinuierlichen Ölstrom im Getriebe 6 sorgt, unabgängig davon, ob der Hauptantriebsmotor 1 oder der Elektromotor 3 die Antriebsleistung liefert. Die beiden Pumpen 19, 21 können zum Beispiel parallel zueinander geschaltet sein.

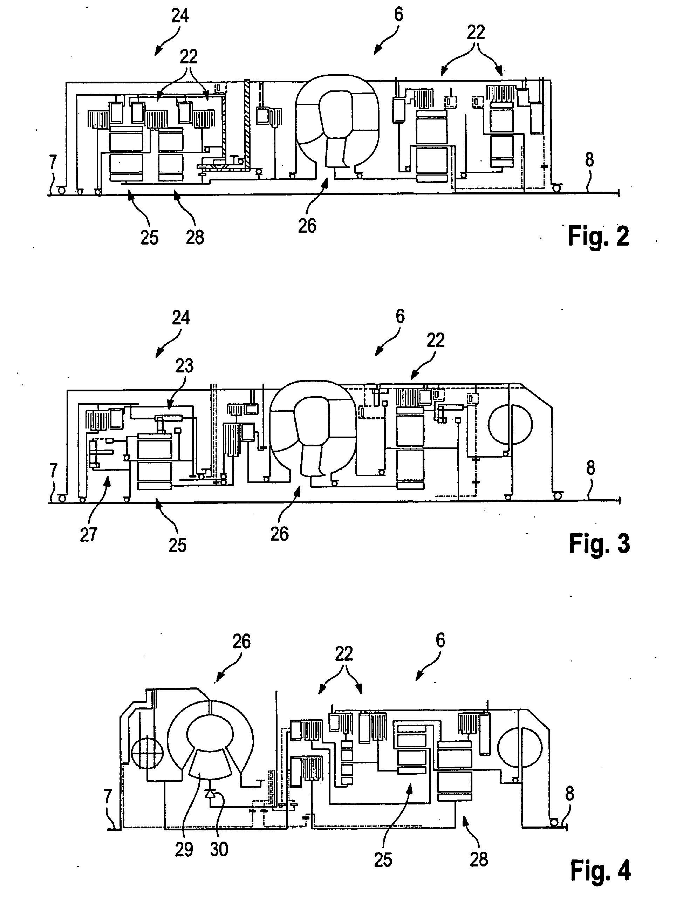

Die Figuren 2 bis 4 zeigen eine besondere Ausführungsform des Getriebes 6 aus Figur 1. Dabei ist in den Figuren 2 und 3 das Getriebe 6 als Direktwandlergetriebe ausgeführt. Derartige Getriebe insbesondere für den Einsatz in Fahrzeugen sind in einer Vielzahl von Ausführungen bekannt. Sie arbeiten vollautomatisch mit einem Gegenlaufwandler, der sowohl für die Beschleunigung während des Anfahrvorganges als auch zur Realisierung der Verzögerung des Fahrzeuges, das heißt im Bremsbetrieb, verwendet wird. Mit einem solchen Getriebe kann auch über längere Zeit stufenlos, das heißt ohne häufiges Schalten gefahren werden. Wie man aus Figur 2 und 3 erkennt, ist in Leistungsübertragungsrichtung gesehen von der Getriebeeingangswelle 7 zur Getriebeausgangswelle 8 zunächst ein Differenzialgetriebe 24 angeordnet, mittels welchem Antriebsleistung von der nicht gezeigten Abtriebswelle 2 des Hauptantriebsmotors 1 zugleich über den weiter hinten im Getriebe 6 angeordneten hydrodynamischen Wandler 26 als auch über einen parallel zum hydrodynamischen Wandler 26 angeordneten rein mechanischen Leistungszweig auf die Getriebeausgangswelle 8 über verschiedene Schaltstufen 22, zum Beispiel umfassend Planetengetriebe und Lamellenkupplungen, zur Einstellung von Vorwärtsgängen und wenigstens einem Rückwärtsgang übertragen werden kann. Zum Beispiel kann die zweite Trennkupplung 20 (Figur 1) als Lamellenkupplung realisiert sein. Vorliegend umfasst das Differenzialgetriebe 24 zwei Planetensätze 25, 28.

Figur 3 zeigt eine vorteilhafte Weiterbildung des Getriebes 6 aus Figur 2. Anstelle der beiden Planetensätze 25, 28 ist lediglich nur ein Planetensatz 25 im Bereich der Getriebeeingangswelle 7 vorgesehen. Dabei wird im Gegensatz zu Figur 2 anstelle des Umschaltens von dem einen Planetensatz 25 auf den anderen Planetensatz 28 hier lediglich die Kopplungsstruktur des Planetensatzes 25 verändert. Vorliegend umfasst das Getriebe 6 hierzu zwei Klauenkupplungen 23, 27. Durch entsprechendes Schalten der Klauenkupplungen 23, 27 wird ein parallel zu diesem einen Planetensatz 25 verlaufender Leistungszweig in einer Gangstufe des Planetensatzes 25 nicht zur Drehmomentübertragung genutzt. Stattdessen liegt nur das Reibmoment einer Lamellenkupplung der entsprechenden Schaltstufe 22 an, welches einen schnellen Schaltvorgang begünstigt. Die Klauenkupplungen 23, 27 können wie die beiden Trennkupplungen 9, 20 betrieben und angesteuert werden. Eine solche Anordnung erlaubt es, das Getriebe 6 kompakter auszuführen.

Die Figur 4 zeigt ein Getriebe 6, welches als ein an sich bekannter Trilok-Wandler ausgeführt ist. Im Wesentlichen sind dieselben Bauteile mit den gleichen Bezugsziffern wie in den Figuren 2 und 3 bezeichnet. Der Wandler 26 umfasst ein wahlweise feststellbares Leitrad 29, siehe die Feststellbremse beziehungsweise Kupplung 30, die beispielsweise als Lamellenpaketkupplung ausgeführt sein kann. Anstelle des Wandlers 26 kann ein erfindungsgemäßer Elektromotor vorgesehen sein, der wie oben beschrieben ausgeführt sein kann.

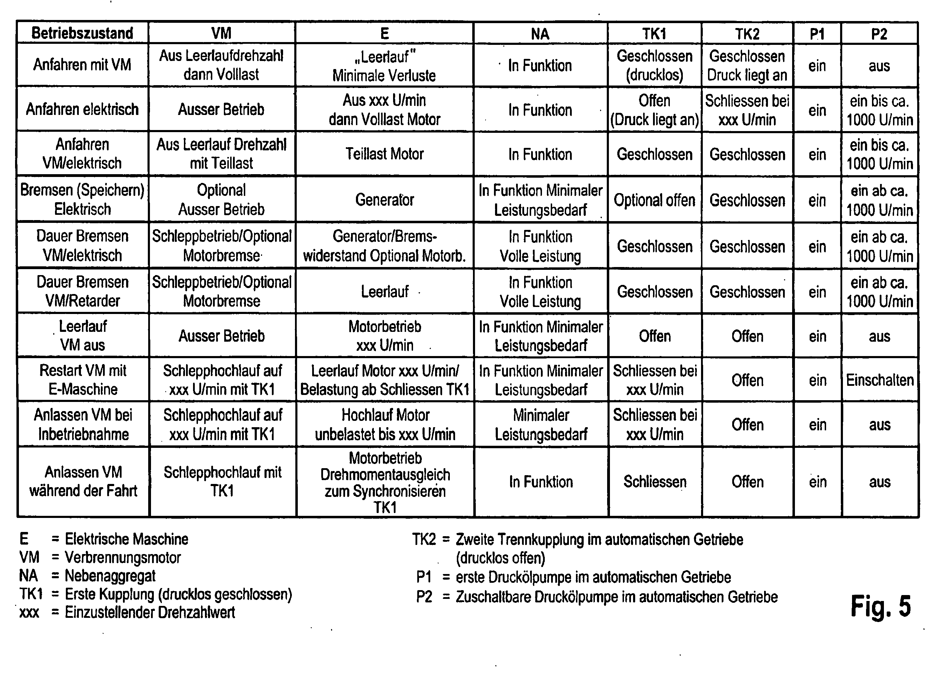

Die Figur 5 zeigt eine Tabelle, in der die Funktionen des erfindungsgemäßen Kraftfahrzeugantriebsstrangs und dessen Komponenten abhängig vom Betriebszustand des Kraftfahrzeugantriebsstrangs dargestellt sind. Dabei können sämtliche erfindungsgemäßen Komponenten, insbesondere die in den Figuren 1 bis 4 beschriebenen Ausführungsformen, miteinander kombiniert werden. Im Folgenden werden die Betriebszustände mit Bezugnahme auf die Figuren 1 bis 4 näher erläutert:

### Anfahren mit Verbrennungsmotor

Der Anfahrvorgang erfolgt hierbei ausschließlich mittels des Hauptantriebs (hier Verbrennungsmotor), somit ohne Zuschaltung des Elektromotors 3. Ein solcher Anfahrvorgang kommt beispielsweise bei leerem Energiespeicher in Betracht oder wenn eine externe Stromquelle nicht verfügbar ist. Er entspricht dem Anfahrvorgang eines Kraftfahrzeuges mit herkömmlichem Antriebsstrang, das heißt ohne Hybridantrieb. Die Drehzahl des Verbrennungsmotors steigt während des Anfahrvorgangs von der Leerlaufdrehzahl bis zur Volllast allmählich an. Der Läufer 4 des Elektromotors läuft bei geschlossener erster Trennkupplung 9 mit der Getriebeeingangswelle 7 um. Das wenigstens eine Nebenaggregat 10 wird über den Läufer 4 angetrieben. Da die zweite Trennkupplung 20 eingerückt ist, wird Antriebsleistung über die Getriebeausgangswelle 8 auf die Räder übertragen. Dabei wird die zweite Pumpe 21, welche in ständiger Triebverbindung mit der Getriebeeingangswelle 7 steht, angetrieben. Die Pumpe 19 ist vorliegend ausgeschaltet, beispielsweise durch Öffnen der ihr zugeordneten Kupplung.

### Anfahren elektrisch

Der Verbrennungsmotor ist vorliegend stillgesetzt, die erste Trennkupplung 9 ist geöffnet. Es wird vorliegend ausschließlich der Elektromotor 3 aus dem Energiespeicher oder mittels der externen Stromversorgung betrieben. Er umläuft ausgehend von einer Ausgangsdrehzahl ("Leerlaufdrehzahl"), die eingestellt werden kann, bis hin zur Volllastdrehzahl. Die Nebenaggregate 10 werden über den Läufer 4 angetrieben. Ab einer gewissen Drehzahl wird die zweite Trennkupplung 20 geschlossen, wodurch der Anfahrvorgang eingeleitet wird und das Fahrzeug langsam beschleunigt. Die Pumpe 19 ist während des Anfahrvorgangs eingeschaltet, wird hiernach jedoch bei ca. 1.000 U/min wieder ausgeschaltet. Dadurch, dass der Elektromotor 3 bereits mit einer bestimmten Drehzahl umläuft, um die Nebenaggregate anzutreiben, kann beim Einleiten des Anfahrvorgangs bereits das volle Drehmoment genutzt werden. Aus diesem Grund kann auch eine Transversalflussmaschine anstelle des Elektromotors 3 eingesetzt werden, wobei auf eine Anlaufvorrichtung zum Beschleunigen des Läufers 4 auf Nenndrehzahl verzichtet werden kann. Umfasst das Getriebe 6 einen Drehmomentwandler, wie oben beschrieben, so wird der Komfort beim Anfahrvorgang verbessert. Um einen entsprechenden Wirkungsgrad zu erreichen, wird die erste Pumpe 19 aktiviert. Diese liefert den nötigen Ölvolumenstrom, um bei Bedarf bereits bei niedrigen Drehzahlen eine Überbrückung des Drehmomentwandlers zu erreichen.

### Anfahren mit Verbrennungsmotor und Elektromotor

Der Elektromotor 3 und der Verbrennungsmotor laufen mit Teillast. Die beiden Trennkupplungen 9, 20 sind geschlossen, so dass die Nebenaggregate sowie das gesamte Fahrzeug angetrieben wird. Die Pumpe 19 wird wie beim "Anfahren elektrisch" geschaltet.

### Bremsen (Speichern, elektrisch)

Dabei ist die Trennkupplung 9 wahlweise geöffnet, ebenso ist der Verbrennungsmotor wahlweise außer Betrieb. Hierdurch werden auch die Schleppverluste des Verbrennungsmotors vermieden, so dass ein höherer Grad an Bewegungsenergie erhalten bleibt, der zur Aufladung der elektrischen Speicher genutzt wird, so dass sich der Gesamtwirkungsgrad des Kraftfahrzeugantriebsstrangs erhöht. Der Elektromotor 3 fungiert somit bei geschlossener Trennkupplung 20 hierbei als Generator, wobei die elektrischen Speicher des Fahrzeugs geladen werden. Die Nebenaggregate sind in Funktion, wobei diese bevorzugt einen minimalen Leistungsbedarf haben. Die Pumpe 19 wird wie beim "Anfahren mit Verbrennungsmotor und Elektromotor" angetrieben.

### Dauerbremsen mit Verbrennungsmotor und elektrisch

Die beiden Trennkupplungen 9, 20 sind geschlossen. Die Pumpen 19, 21 arbeiten wie im elektrischen Speicherbetrieb. Der Verbrennungsmotor befindet sich im Schleppbetrieb. Umfasst das Fahrzeug eine Motorbremseinrichtung, so kann diese wahlweise aktiviert werden. Der Elektromotor befindet sich im Generatorbetrieb. Überschüssige Energie, die nicht in den elektrischen Speichern gespeichert werden kann, wird beispielsweise in einem gekühlten Widerstand in Wärme umgewandelt. Alternativ kann der Verbrennungsmotor und insbesondere die Abtriebswelle 2 mittels des Elektromotors 3 und insbesondere durch dessen Antreiben verzögert werden. Die Nebenaggregate sind in Funktion, insbesondere können diese mit voller Leistung arbeiten.

### Dauerbremsen mit Verbrennungsmotor und Retarder

Dieser Betriebszustand unterscheidet sich zum "Dauerbremsen mit Verbrennungsmotor und elektrisch" lediglich dadurch, dass sich der Elektromotor 3 im Leerlauf befindet. Dabei ist das Fahrzeug mit einem hydrodynamischen Retarder oder einer sonstigen Dauerbremse ausgestattet, durch welche das Fahrzeug zusätzlich verzögert wird.

### Leerlauf Verbrennungsmotor aus

Dieser Betriebszustand beschreibt den Stillstand des Kraftfahrzeugs mit ausgeschaltetem Verbrennungsmotor. Die beiden Trennkupplungen 9, 20 sind folglich geöffnet. Der Elektromotor 3 läuft im Motorbetrieb mit einer Leerlaufdrehzahl, die Nebenaggregate sind in Funktion, benötigen jedoch einen minimalen Leistungsbedarf. Der Vorteil der Abschaltung des Verbrennungsmotors ist neben der Kraftstoffeinsparung derer, dass das Abgasreinigungssystem - vor allem bei mit Russfilter ausgerüsteten Dieselmotoren - nicht im Leerlauf auskühlt und somit bei Fahrzeugen wie beispielsweise Linienbussen mit einem ausgeprägten Stopp-Go-Betrieb wesentlich effizienter arbeitet. Die erste Pumpe 19 ist außer Betrieb.

### Restart des Verbrennungsmotors mit Elektromotor

Im Ausgangszustand sind beide Trennkupplungen 9, 20 geöffnet. Die Nebenaggregate sind in Funktion, benötigen jedoch einen minimalen Leistungsbedarf. Der Elektromotor 3 befindet sich im Leerlauf, umläuft mit einer bestimmten Drehzahl. Bei Schließen der ersten Trennkupplung 9 wird der Verbrennungsmotor auf eine Startdrehzahl hochgeschleppt, wobei der Elektromotor 3 ausgehend von dem nahezu lastfreien Zustand vor dem Einkuppeln zunehmend belastet wird. Das Drehmoment des Elektromotors 3 kann dabei so gesteuert werden, dass sich die Drehzahl der elektrischen Maschine nur unwesentlich ändert, so dass die Nebenaggregate 10 weiter mit konstanter Drehzahl betrieben werden können. Das automatische Getriebe bleibt durch die eingeprägte Drehzahl des Elektromotors anfahrbereit, bei Bedarf kann bei niedrigen Drehzahlen der Nebenaggregate, um Verluste zu vermeiden, die Pumpe 19 zugeschaltet werden, so dass die volle Funktion des Getriebes 6 gewährleistet wird.

### Anlassen Verbrennungsmotor bei Inbetriebnahme

Die Nebenaggregate 10 verhalten sich wie beim Betriebszustand "Restart Verbrennungsmotor mit Elektromotor", beide Trennkupplungen 9, 20 sind zuerst geöffnet. Der Elektromotor 3 wird nahezu lastfrei hochgelaufen bis zu einer bestimmten Drehzahl, dann wird durch Schließen der ersten Trennkupplung 9 der Verbrennungsmotor hochgeschleppt und startet in Leerlaufdrehzahl. Hierdurch kann auf einen herkömmlichen Anlasser verzichtet werden. Die Elektromaschine 3 kann auch hier als Transversalflussmaschine ausgeführt sein. Zusätzlich kann die Pumpe 19 bereits bei niedrigen Drehzahlen zugeschaltet werden.

### Anlassen Verbrennungsmotor während der Fahrt

Das Wiederanlassen während der Fahrt aus dem elektrischen Speicher ("Segelbetrieb") geschieht sinngemäß wie beim "Restart". Dabei kann die Drehzahl beziehungsweise das Drehmoment des Elektromotors 3 derart geregelt werden, dass dieser/diese mit der/dem des Verbrennungsmotors während des Hochschleppens synchronisiert wird. Hierdurch werden unangenehme Ruckbewegungen für den Fahrer vermieden.

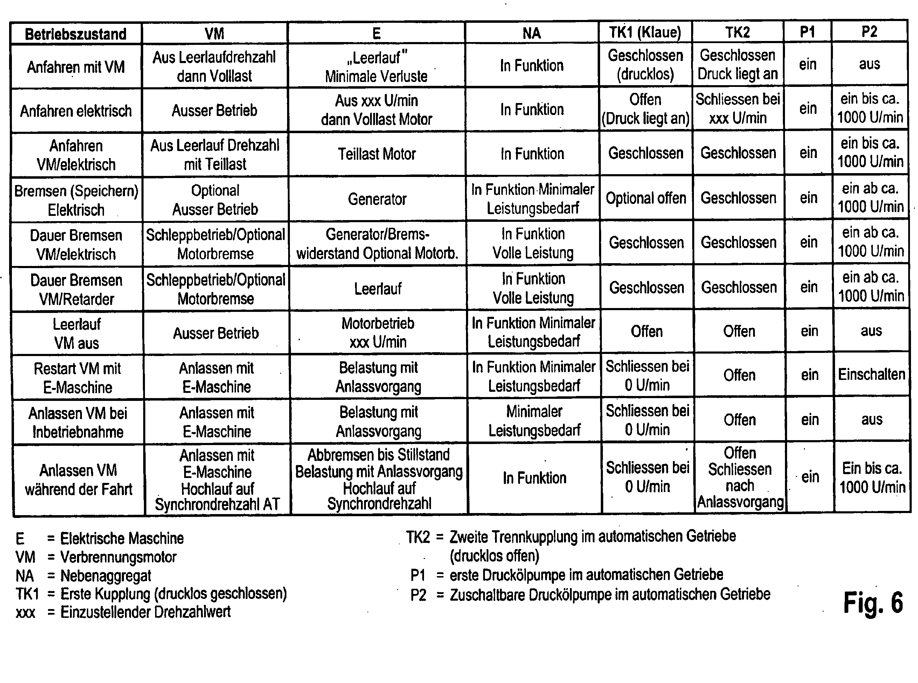

Figur 6 beschreibt im Wesentlichen dieselben Betriebszustände wie in Figur 5, jedoch ist das Getriebe 6 als Trilok-Wandler gemäß Figur 4 ausgeführt. Dabei sind die Betriebszustände bis auf die letzten drei identisch mit Figur 5, so dass auf diese vorliegend nicht eingegangen wird.

### Restart Verbrennungsmotor mit Elektromotor

Zunächst wird der Elektromotor kurzzeitig stillgesetzt, so dass die als Klauenkupplung ausgeführte erste Trennkupplung 9 im Stillstand geschlossen werden kann. Nach Einrücken der Klauenkupplung wird der Verbrennungsmotor gemeinsam mit dem Elektromotor angelassen. Die Belastung des Elektromotors steigt mit dem Anlassvorgang. Zusätzlich kann die Pumpe 19 zur Sicherstellung der Ölversorgung im Stillstand eingeschaltet werden. Alternativ oder zusätzlich kann ein Speicher 31 (Figur 1), der zum Beispiel im Getriebe 6 untergebracht sein kann, das Getriebe 6 sowie die Klauenkupplung zu deren Betätigung mit Drucköl versorgen. Beim Anlassvorgang werden die Nebenaggregate mit minimalem Leistungsbedarf angetrieben.

### Anlassen Verbrennungsmotor bei Inbetriebnahme

Dieser Betriebszustand entspricht im Wesentlichen dem "Restart Verbrennungsmotor mit Elektromotor', wobei die Pumpe 19 ausgeschaltet ist.

### Anlassen Verbrennungsmotor während der Fahrt

Dabei wird der Elektromotor 3 bis zum Stillstand abgebremst, so dass die Klauenkupplung bei Drehzahl 0 eingerückt und geschlossen werden kann. Die zweite Trennkupplung 20 ist während des Anlassvorgangs geöffnet. Nach Schließen der ersten Trennkupplung 9 wird der Verbrennungsmotor zusammen mit dem Elektromotor 3 hochgelaufen, bis eine Synchrondrehzahl erreicht ist. Nach dem Anlassvorgang wird die zweite Trennkupplung 20 geschlossen. Die erste Pumpe 19 schaltet ab ca. 1.000 U/min aus.

### Bezugszeichenliste

- 1: Hauptantriebsmotor
- 2: Abtriebswelle
- 3: Elektromotor
- 4: Läufer
- 5: Stator
- 6: Getriebe
- 7: Getriebeeingangswelle
- 8: Getriebeausgangswelle
- 9: Trennkupplung
- 10: Nebenaggregat
- 11: Getriebegehäuse
- 12: Nebenabtriebsmodul
- 13: Gehäuse
- 14: Nebenabtriebswelle
- 15: Ritzel
- 16: Zahnrad
- 17: Schwungrad
- 18: Drehschwingungsdämpfer
- 19: Pumpe
- 20: Trennkupplung
- 21: Pumpe
- 22: Schaltstufe
- 23: Klauenkupplung
- 24: Differenzialgetriebe
- 25: Planetensatz
- 26: hydrodynamischer Wandler
- 27: Klauenkupplung
- 28: Planetensatz
- 29: Leitrad
- 30: Feststellbremse
- 31: Speicher

## Patentansprüche

1. Kraftfahrzeugantriebsstrang
1.1 mit einem Hauptantriebsmotor (1) umfassend eine Abtriebswelle (2) zum Antrieb von Antriebsrädern des Kraftfahrzeugs;
1.2 mit einem Elektromotor (3), umfassend einen Läufer (4) und einen Stator (5), ebenfalls zum Antrieb der Antriebsräder des Kraftfahrzeugs;
1.3 mit einem automatischen Getriebe (6), automatisiertem Schaltgetriebe oder manueller Schaltgetriebe umfassend eine Vielzahl von wahlweise einstellbaren Triebverbindungen zur Darstellung von Gängen und mit einer Getriebeeingangswelle (7) und einer Getriebeausgangswelle (8), um eine Vielzahl von Übersetzungen zwischen der Getriebeeingangswelle (7) und der Getriebeausgangswelle (8) wahlweise einzustellen; wobei 1.4 der Läufer (4) des Elektromotors in einer Triebverbindung zwischen der Abtriebswelle (2) des Hauptantriebsmotors (1) und der Getriebeeingangswelle (7) angeordnet ist und mittels einer Trennkupplung (9) von der Abtriebswelle (2) abkuppelbar ist;
1.5 mit wenigstens einem Nebenaggregat (10), das mittels des Hauptantriebsmotors (1) antreibbar ist;
1.6 mit einem Nebenabtriebsmodul (12);
1.7 der Läufer (4) des Elektromotors (3) einen Außenantrieb mit einer Verzahnung oder Reibfläche aufweist, welche in einer treibenden Verbindung mit dem wenigstens einen Nebenaggregat (10) steht, um dieses mittels des Läufers (4) anzutreiben; **dadurch gekennzeichnet, dass**
1.8 das Getriebe (6) ein Getriebegehäuse (11) aufweiset, auf dessen erster Stirnseite die Getriebeeingangswelle (7) angeordnet ist, und auf dessen zweiten, der ersten Stirnseite entgegengesetzt angeordneten Stirnseite insbesondere die Getriebeausgangswelle (8) angeordnet ist, und dass
1.9 auf der ersten Stirnseite am Getriebegehäuse (11) das Nebenabtriebsmodul (12) angeschlossen ist, umfassend ein Gehäuse (13), welches den Elektromotor (3), die Trennkupplung (9) sowie eine Nebenabtriebswelle (14) umschließt, wobei
1.10 die Nebenabtriebswelle (14) in einer Triebverbindung mit dem Läufer (4) steht, insbesondere ein Ritzel (15) trägt, das mit der Außenverzahnung des Läufers (4) unmittelbar oder über ein zwischengeschaltetes Zahnrad (16) kämmt, und das Nebenaggregat (10) oder einen Rotor desselben antreibt und insbesondere trägt.

2. Kraftfahrzeugantriebsstrang gemäß einem der Ansprüche 1, **dadurch gekennzeichnet, dass** in der Triebverbindung zwischen der Trennkupplung (9) und der Abtriebswelle des Verbrennungsmotors (1) ein Schwungrad (17) und insbesondere ein Drehschwingungsdämpfer (18) angeordnet sind.

3. Kraftfahrzeugantriebsstrang gemäß einem der Ansprüche 1 oder 2, **dadurch gekennzeichnet, dass** der Läufer (4) des Elektromotors (3) in einer Triebverbindung, insbesondere ständigen Triebverbindung mit wenigstens einer Pumpe (19), insbesondere Ölpumpe und/oder Wasserpumpe, steht.

4. Kraftfahrzeugantriebsstrang gemäß Anspruch 3, **dadurch gekennzeichnet, dass** die wenigstens eine Pumpe (19) über die Getriebeeingangswelle (7) angetrieben wird, und zwischen der Getriebeeingangswelle (7) und der Vielzahl von wahlweise einstellbaren Triebverbindungen zur Darstellung von Gängen eine zweite Trennkupplung (20) vorgesehen ist.

5. Kraftfahrzeugantriebsstrang gemäß einem der Ansprüche 1 bis 4, **dadurch gekennzeichnet, dass** die Abtriebswelle (2) des Verbrennungsmotors (1) die Trennkupplung (9), der Läufer (4), die Getriebeeingangswelle (7) und insbesondere die Getriebeausgangswelle (8) fluchtend zueinander angeordnet sind.

6. Kraftfahrzeugantriebsstrang gemäß einem der Ansprüche 1 bis 5, **dadurch**
**gekennzeichnet, dass** der Stator (5) des Elektromotors (3) ortsfest im Gehäuse (13) des Nebenabtriebsmoduls (12) gelagert oder einteilig mit diesem ausgeführt ist.

## Claims

1. A motor vehicle power train, especially for heavy-duty commercial vehicles;
1.1 comprising a main drive engine (1), especially an internal combustion engine, comprising an output shaft (2) for driving the drive wheels of the motor vehicle;
1.2 an electric motor (3), comprising a rotor (4) and a stator (5), also for driving the drive wheels of the motor vehicle;
1.3 an automatic transmission (6), automatic gearbox or manual gearbox, comprising a plurality of selectively settable drive connections for the implementation of gears, and a transmission input shaft (7) and a transmission output shaft (8) in order to selectively set a plurality of gear ratios between the transmission input shaft (7) and the transmission output shaft (8), with
1.4 the rotor (4) of the electric motor being disposed in a drive connection between the output shaft (2) of the main drive engine (1) and the transmission input shaft (7), and can be decoupled from the output shaft (2) by means of a clutch (9);
1.5 at least one ancillary unit (10) which can be driven by the main drive engine (1);
1.6 the rotor (4) of the electric motor (3) comprises an exterior drive having a gearing or friction surface which has a driving connection to the at least one ancillary unit (10) in order to drive the same by means of the rotor (4). **characterized in that**
1.7 the transmission (6) comprises a transmission housing (11), with the transmission input shaft (7) being arranged on its first face side and the transmission output shaft (8) being especially arranged on its second face side which is arranged opposite of the first face side, and
1.8 an auxiliary output module (12) is connected on the first face side to the transmission housing (11), comprising a housing (13) which encloses the electric motor (3), the clutch (9) and an auxiliary output shaft (14) which protrudes especially from the housing (13), with
1.9 the auxiliary output shaft (14) being in a drive connection with the rotor (4) and especially bearing a pinion (15) which meshes with the external gearing of the rotor (4) either indirectly or via an interposed gearwheel (16) and drives the ancillary unit (10) or a rotor of the same, and especially carries the same.

2. A motor vehicle power train according to claim 1, **characterized in that** a flywheel (17) and especially a torsional vibration damper (18) are arranged in the drive connection between the clutch (9) and the output shaft of the internal combustion engine (1).

3. A motor vehicle power train according to one of the claims 1 or 2, **characterized in that** the rotor (4) of the electric motor (3) is in a drive connection, especially a permanent drive connection, with at least one pump (19), especially an oil pump and/or water pump.

4. A motor vehicle power train according to claim 3, **characterized in that** the at least one pump (19) is driven via the transmission input shaft (7), and a second clutch (20) is provided between the transmission input shaft (7) and the plurality of selectively settable drive connections for the implementation of gears.

5. A motor vehicle power train according to one of the claims 1 to 4, **characterized in that** the output shaft (2) of the internal combustion engine (1), the clutch (9), the rotor (4), the transmission input shaft (7) and especially the transmission output shaft (8) are arranged in alignment with one another.

6. A motor vehicle power train according to one of the claims 1 to 5, **characterized in that** the stator (5) of the electric motor (3) is mounted in a stationary manner in the housing (13) of the auxiliary output module (12) or is arranged in an integral manner with the same.

## Revendications

1. Train d'entraînement de véhicule automobile
1.1 muni d'un moteur d'entraînement principal (1) comprenant un arbre de sortie (2) pour entraîner les roues d'entraînement du véhicule automobile;
1.2 muni d'un moteur électrique (3), comportant un rotor (4) et un stator (5), également assurant l'entraînement des roues d'entraînement du véhicule automobile;
1.3 pourvu d'une transmission automatique (6), d'une boîte de vitesse automatique ou d'une boîte de vitesse manuelle comprenant une pluralité de liaisons motrices réglables de manière sélective pour obtenir différentes vitesses, de même que d'un arbre d'entrée de transmission (7) et d'un arbre de sortie de transmission (8), afin de régler une pluralité de rapports de transmission entre l'arbre d'entrée de transmission (7) et l'arbre de sortie de transmission (8) de manière sélective; dans lequel
1.4 le rotor (4) du moteur électrique est disposé en liaison motrice entre l'arbre de sortie (2) du moteur d'entraînement principal (1) et l'arbre d'entrée de transmission (7) et peut être découplé de l'arbre de sortie (2) au moyen d'un embrayage de séparation (9);
1.5 comportant au moins un groupe auxiliaire (10) qui peut être entraîné au moyen du moteur d'entraînement principal (1);
1.6 pourvu d'un module d'entraînement auxiliaire (12);
1.7 le rotor (4) du moteur électrique (3) présente un entraînement externe pourvu d'une denture ou d'une surface de friction, qui est en liaison motrice avec ledit au moins un groupe auxiliaire (10), pour assurer l'entraînement de celui-ci à l'aide du rotor (4); **caractérisé en ce que**
1.8 que la transmission (6) présente une boîte de vitesses (11) sur la première face avant de laquelle l'arbre d'entrée de transmission (7) est agencé, sur la seconde face avant de laquelle, opposée à la première face avant, en particulier l'arbre de sortie de transmission (8) est agencé, et **en ce que**
1.9 sur la première face avant au niveau de la boîte de vitesses (11) se trouve connecté l'entraînement auxiliaire (12), comprenant un boîtier (13), entourant le moteur électrique (3), l'embrayage de séparation (9) de même qu'un arbre d'entraînement auxiliaire (14), dans lequel
1.10 l'arbre d'entraînement auxiliaire (14) est en liaison motrice avec le rotor (4), et en particulier supporte un pignon (15) qui s'engrène directement ou par l'intermédiaire d'une roure dentée (16) interposée, avec la denture externe du rotor (4), et entraîne, et en particulier supporte, le groupe auxiliaire (10) ou bien un rotor de celui-ci.

2. Train d'entraînement de véhicule automobile selon l'une des revendications 1, **caractérisé en ce qu'**un volant (17), et un amortisseur de vibrations torsionelles (18), sont disposés dans la liaison motrice entre l'embrayage de séparation (9) et l'arbre de sortie du moteur à combustion (1).

3. Train d'entraînement de véhicule automobile selon l'une des revendications 1 ou 2, **caractérisé en ce que** le rotor (4) du moteur électrique (3) est en liaison motrice, en particulier en liaison motrice constante, avec au moins une pompe (19), en particulier une pompe à huile et/ou une pompe à eau.

4. Train d'entraînement de véhicule automobile selon la revendication 3, **caractérisé en ce que** ladite au moins une pompe (19) est entraînée par le biais de l'arbre d'entrée de transmission (7), et qu'un second embrayage de séparation (20) est prévu entre l'arbre d'entrée de transmission (7) et la pluralité de liaisons motrices réglables de manière sélective pour obtenir les différentes vitesses.

5. Train d'entraînement de véhicule automobile selon l'une des revendications 1 à 4, **caractérisé en ce que** l'arbre de sortie (2) du moteur à combustion, l'embrage de séparation (9), le rotor (4), l'arbre d'entrée de transmission (7) et en particulier l'arbre de sortie de transmission(8) sont alignés l'un par rapport à l'autre.

6. Train d'entraînement de véhicule automobile selon l'une des revendications 1 à 5, **caractérisé en ce que** le stator (5) du moteur électrique (3) repose à demeure dans le carter (13) du entraînement auxiliaire ou constitue un seul tenant avec celui-ci.
